# EUROPÄISCHE PATENTANMELDUNG

(11) **EP 2 324 945 A1**
(43) Veröffentlichungstag der Anmeldung: **25.05.2011**
(21) Anmeldenummer: 10014850.1
(22) Anmeldetag: 23.11.2010
(51) Int. Cl.: B23C 5/28

(54) **Rotierendes Wekzeug zur materialabtragenden Bearbeitung mit abdichtungsfreier, zwangsgeführter und fliehkraftgestützter Kühlschmiermittel-Zufuhr**

(30) Priorität: 24.11.2009 DE 102009054320
(71) Anmelder: ALEIT GmbH, D-35239 Steffenberg (DE)
(72) Erfinder: Aleit, Holger, 35239 Steffenberg (DE)
(74) Vertreter: Wolff, Felix

(57) **Zusammenfassung**

Die Erfindung betrifft ein rotierendes Werkzeug (100) für eine Werkzeugmaschine zur materialabtragenden Bearbeitung von Werkstücken mit einem Abtragungsmittel (105) und einem Werkzeuganschluss (108).

## Beschreibung

Die Erfindung betrifft ein rotierendes Werkzeug für eine Werkzeugmaschine zur materialabtragenden Bearbeitung von Werkstücken mit einem Abtragungsmittel und einem Werkzeuganschluss.

Solche Fräsköpfe sind allgemein, beispielsweise aus den Druckschriften DE 102 51 922 A 1, DE 20 2009 001 623 U1, DE 201 22 648 U1 und DE 101 14 240 A 1 bekannt. In der Druckschrift DE 102 51 922 A 1 wird ein Fräskopf beschrieben, bei dem ein Kühlschmiermittel für ein spanabhebendes Werkzeug in einer Zuleitung durch die Fräserachse geleitet wird. Nachteilig bei dieser Zuleitung ist, dass das Werkzeug eine Maschine erfordert, die eine direkte innere Kühlmittelzufuhr durch die Maschinenspindel besitzen muss. Diese Maschinen sind jedoch vergleichsweise aufwendig herzustellen und zu warten bzw. sind solche Maschinen in vielen Betrieben noch nicht vorhanden, da diese oft auch teuer in der Anschaffung sind.

Es war deshalb die Aufgabe der vorliegenden Erfindung einen rotierendes Werkzeug zur Verfügung zu stellen, das die Nachteile des Standes der Technik nicht aufweist.

Gelöst wird die Aufgabe mit einem rotierenden Werkzeug für eine Werkzeugmaschine zur materialabtragenden Bearbeitung von Werkstücken mit einem Abtragungsmittel und einem Werkzeuganschluss, wobei das Werkzeug mindestens einen Kühlschmiermittel-Kanal mit jeweils einer Eintrittsöffnung und jeweils mindestens einer Austrittsöffnung aufweist und die Eintrittsöffnung in ein Kühlschmiermittelreservoir mündet, das eine, vorzugsweise mit der Umgebung verbundene, Einfüllöffnung aufweist.

Das erfindungsgemäße Werkzeug hat gegenüber dem Stand der Technik den Vorteil, dass ein beliebiges Kühlschmiermittel, das kühlt und/oder schmiert, unabhängig von der Maschine, an der es montiert ist, unmittelbar an die Wirkstelle des Abtragungsmittels des Werkzeugs gebracht werden kann. Dadurch ist die Stelle, an der die materialabtragende Bearbeitung des Werkstückes erfolgt, optimal geschmiert und/oder optimal gekühlt. Dies war für den Fachmann überaus erstaunlich und nicht zu erwarten, weil, insbesondere bei hohen und sehr hohen Drehzahlen bzw. Umfangs- oder Schnittgeschwindigkeiten, die direkte Versorgung der für die Abtragung wichtigsten Bereiche mit Kühlschmiermittel problematisch ist. Durch die Erfindung ist es möglich, die Versorgung der Wirkstelle des Abtragungsmittel mit Kühlschmiermittel, ähnlich einer inneren Kühlschmierstoffzufuhr, auf jeder Maschine zu realisieren, auch wenn diese nicht über eine innere Kühlschmierstoffzufuhr durch die Maschinenspindel verfügt. Wegen der gezielteren und wesentlich effizienteren Zufuhr können Betriebskosten wesentlich gesenkt werden.

Die vorliegende Erfindung betrifft jedes beliebige, rotierende Werkzeug, das von einem Werkstück Material abträgt. Lediglich beispielhaft seien hier ein Fräskopf oder eine Schleifscheibe genannt.

Das erfindungsgemäße Werkzeug wird zumindest während der abtragenden Bearbeitung kontinuierlich oder intermittierend vorzugsweise von außerhalb, d.h. aus der Umgebung und nicht beispielsweise durch die Maschinenspindel, mit dem Kühlschmiermittel versorgt, indem beispielsweise ein Kühlschmiermittelstrahl auf die Einfüllöffnung gerichtet wird und es von dort in das Kühlschmiermittelreservoir gelangt. In diesem Reservoir wird vorzugsweise eine gewisse Menge an Kühlschmiermittel bevorratet, um sicherzustellen, dass der Kühlschmiermittelstrom zu den Abtragungsmitteln des Werkzeugs nicht abreißt. Vorzugsweise ist der Zufluss an Kühlschmiermittel zu dem Reservoir größer oder zumindest gleich dem Abfluss an Kühlschmiermittel aus dem Reservoir.

Von diesem Kühlschmiermittel-Reservoir führt mindestens ein, vorzugsweise mehrere Kühlschmiermittel-Kanäle zu jedem Abtragungsmittel, beispielsweise jeder Schneide. Dabei wird das Kühlschmiermittel mittels der durch die Rotation des Werkzeugs vorhandenen Fliehkräfte durch den jeweiligen Kanal von dem Reservoir zu dem Abtragungsmittel gefördert. Der jeweilige Kanal, beispielsweise eine Bohrung, insbesondere dessen Austrittsöffnung, ist dabei vorzugsweise so angeordnet, dass eine gewisse Führung des Kühlschmiermittels erreicht wird. Vorzugsweise wird der jeweilige Kanal so ausgerichtet, dass das Kühlschmiermittel mit einer gewissen Vorhaltung auf die Bearbeitungsstelle gerichtet wird, so dass, bezogen auf die Bewegungsrichtung des Werkzeugs erst das Kühlschmiermittel auf das zu bearbeitende Werkstück trifft, bevor das Abtragungsmittel diese Stelle erreicht. Ein gleichzeitiges Auftreffen von Kühlschmiermittel und Zeitpunkt der Bearbeitung kann alternativ oder zusätzlich erwünscht sein. Die gezielte Zufuhr des Kühlschmiermittels auf die Wirkstelle des Abtragungsmittels hat eine verbesserte Oberflächengüte und/oder eine verbesserte Werkzeugstandzeit zur Folge.

Für die Position des Kühlschmiermittel-Reservoirs und/oder der Einfüllöffnung kommt jede geeignete Position an dem Werkzeug in Frage. Vorzugsweise ist die Öffnung und/oder das Reservoir stirnseitig, d.h. an dem Werkzeuganschluss abgewandten Ende des Werkzeugs, vorgesehen. Alternativ oder zusätzlich ist die Öffnung und/oder das Reservoir zwischen dem Abtragungsmittel und dem Werkzeuganschluss angeordnet.

In einer bevorzugten Ausführungsform der vorliegenden Erfindung verläuft die Rotationsachse des Werkzeugs mittig durch die Einfüllöffnung und das Kühlschmiermittel-Reservoir. In einer anderen bevorzugten Ausführungsform verläuft das Reservoir konzentrisch, besonders bevorzugt als Kreisring oder kreisringähnlich um die Rotationsachse

Vorzugsweise ist die Einfüllöffnung eine rotationssymmetrische Ausnehmung.

In einer bevorzugten Ausführungsform mündet die Einfüllöffnung in das Reservoir, das besonders bevorzugt zumindest abschnittsweise einen größeren Querschnitt als die Einfüllöffnung aufweist.

Vorzugsweise ist das Reservoir im Wesentlichen rotationssymmetrisch oder konzentrisch bezüglich der Rotationsachse des Werkzeugs angeordnet.

Vorzugsweise weist das Werkzeug eine Vielzahl von Abtragungsmitteln, beispielsweise Schneiden auf, die ganz besonders bevorzugt äquidistant am Umfang des Werkzeuges angeordnet sind. Besonders bevorzugt ist die Anzahl an Austrittsöffnungen, durch die das Kühlschmiermittel austritt ≥ der Anzahl der Abtragungsmittel.

Vorzugsweise ist die jeweilige Austrittsöffnung an der jeweiligen Schneide bezüglich der Rotationsachse des Werkzeugs in radialer Richtung gegenüberliegend angeordnet.

In einer bevorzugten Ausführungsform der vorliegenden Erfindung erstreckt sich der jeweilige Kanal senkrecht zur Rotationsachse des Werkzeugs oder beliebig dazu geneigt.

Erfindungsgemäß oder gemäß einer weiteren bevorzugten Ausführungsform der vorliegenden Erfindung ist das Kühlschmiermittel drucklos oder unter Druck dem Werkzeug, insbesondere der Einfüllöffnung und/oder dem Reservoir, zuführbar.

Vorzugsweise wird es dem Reservoir als Strahl, der durch die Einfüllöffnung tritt, zugeführt, wobei das Mittel, aus dem der Strahl austritt das Werkzeug vorzugsweise nicht berührt. In einer anderen bevorzugten Ausführungsform ist eine Kontaktstelle oder eine Adaptierung zwischen dem Mittel und der Einfüllöffnung vorhanden.

Erfindungsgemäß oder gemäß einer weiteren bevorzugten Ausführungsform der vorliegenden Erfindung ist das Werkzeug an Maschinen montierbar, die keine innere Kühlmittel Zufuhr (IKZ) aufweisen. Ein weiterer Gegenstand der vorliegenden Erfindung ist deshalb ein System bestehend aus dem erfindungsgemäßen Werkzeug und einer Maschine ohne IKZ.

Erfindungsgemäß oder gemäß einer weiteren bevorzugten Ausführungsform der vorliegenden Erfindung ist zwischen dem erfindungsgemäßen Werkzeug und der Kühlschmiermittel-Zufuhr keine Abdichtung im Bereich der Kühlschmiermittel-Übergabe erforderlich. In einer anderen bevorzugten Ausführungsform ist eine Abdichtung oder eine Adaptierung zwischen dem Werkzeug und der Kühlschmiermittel-Zufuhr vorhanden.

Vorzugsweise ist das Abtragungsmittel ein Schleifmittel, d.h. das erfindungsgemäße Werkzeug eine Schleifscheibe. Vorzugsweise ist diese Schleifscheibe so ausgeführt, dass sie auf mindestens einer Stirnseite mindestens ein Kühlschmiermittelreservoir aufweist. Bezüglich der Form und der Anordnung des Reservoirs und die Einführung des Kühlschmiermittels wird auf die oben gemachten Ausführungen verwiesen.

Im Folgenden wird die Erfindung anhand der Figuren 1 - 4 erläutert. Diese Erläuterungen sind lediglich beispielhaft und schränken den allgemeinen Erfindungsgedanken nicht ein.

Die Erläuterungen gelten für alle Gegenstände der vorliegenden Erfindung.
- **Figur 1**: zeigt einen Fräskopf mit einer stirnseitigen Kühlschmiermittelzufuhr.
- **Figur 2**: zeigt einen Fräskopf mit einer Kühlschmiermittelzufuhr zwischen Werkzeugaufnahme und Abtragungswerkzeug.
- **Figur 3**: zeigt eine Schleifscheibe als erfindungsgemäßes Werkzeug.
- **Figur 4**: zeigt eine weitere Ausführungsform der Schleifscheibe.

In den verschiedenen Figuren sind gleiche Teile stets mit den gleichen Bezugszeichen versehen und werden daher in der Regel auch jeweils nur einmal benannt bzw. erwähnt.

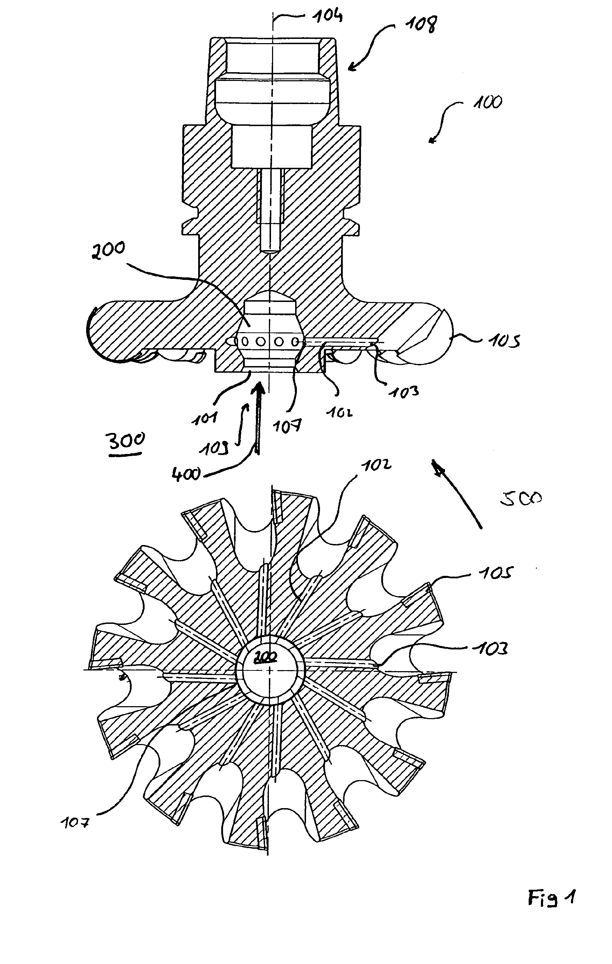

In Figur 1 zeigt eine erste Ausführungsform des erfindungsgemäßen Werkzeuges, hier ein Fräskopf 100, der über eine Vielzahl von Abtragungsmittel 105, nämlich Schneiden verfügt. Die Drehrichtung des Werkzeuges ist durch den Pfeil 500 dargestellt. Der Fräskopf 100 weist an seiner einen Seite eine Werkzeugaufname 108 auf, mit der das Werkzeug an einer Maschine befestigt wird. An dem der Werkzeugaufnahme gegenüberliegenden Ende des Werkzeuges befindet sich dessen Stirnseite. Dort ist eine Einfüllöffnung 101 vorgesehen, durch die ein Kühlschmiermittel, wie durch den Pfeil 400 dargestellt, in ein Reservoir 200 eingefüllt wird. Sowohl die Einfüllöffnung als auch das Reservoir sind rotationssymmetrisch zu der Rotationsachse 104 vorgesehen. Der Durchmesser des Reservoirs 200 ist abschnittsweise größer als der Durchmesser der Einfüllöffnung 101. Von dem Reservoir gehen eine Vielzahl von Kühlschmiermittelkanälen ab, die jeweils mit ihrer Austrittsöffnung 103 jeweils im Bereich der Abtragungsmittel 105 enden. Bezogen auf die Drehrichtung des Werkzeuges ist die Austrittsöffnung 103 dem Abtragungsmittel jeweils vorgelagert. Die Anzahl der am Umfang des Reservoirs vorgesehenen Kühlschmiermittelkanäle entspricht der Anzahl der Schneiden 105. Die Kühlschmiermittelkanäle 102 verlaufen in radialer Richtung im Wesentlichen senkrecht zur Rotationsachse 104 des Fräskopfes 100. Die Kühlschmiermittelaustrittsöffnungen 103 sind in radialer Richtung gegenüber von Schneiden 105 angeordnet. Der Fräskopf 100 ist als Messerkopf ausgebildet, sodass die Schneiden 105 radial am Fräskopf 100 angeordnet sind. Alternativ ist es auch möglich, die Schneiden und die Kühlschmiermittelaustrittsöffnungen stirnseitig am Fräskopf anzuordnen.

Im Betrieb wird der Fräskopf 100 in Rotation um die Rotationsachse 104 versetzt. Das Kühlschmiermittel wird stirnseitig beispielsweise durch einen Strahl aus einem Schlauch in die Kühlschmiermitteleinfüllöffnung 101 eingebracht, wobei der Schlauch das Werkzeug vorzugsweise nicht berührt. Von dort strömt es in das Reservoir 200. Durch die Rotation und die dadurch entstehenden Fliehkräfte fließt das Kühlschmiermittel dann durch alle Kanäle 102 und verlässt diese jeweils durch die Austrittsöffnung und gelangt von dort unmittelbar in den Bereich der jeweiligen Schneide 105, um diese zu kühlen und/oder den Bereich der Abtragung zu schmieren. Vorzugsweise ist der Volumenstrom des Kühlschmiermittelstrahls größer als der gesamte Kühlschmiermittelvolumenstrom durch alle Kanäle. Der Fachmann erkennt, dass im Gegensatz zum Stand der Technik die Kühlschmiermittelzufuhr aus der Umgebung 300 des Werkzeuges und nicht, wie beim Stand der Technik, beispielsweise durch eine Maschinenspindel erfolgt. An der Einfüllöffnung 101 herrscht im wesentlichen Umgebungsdruck.

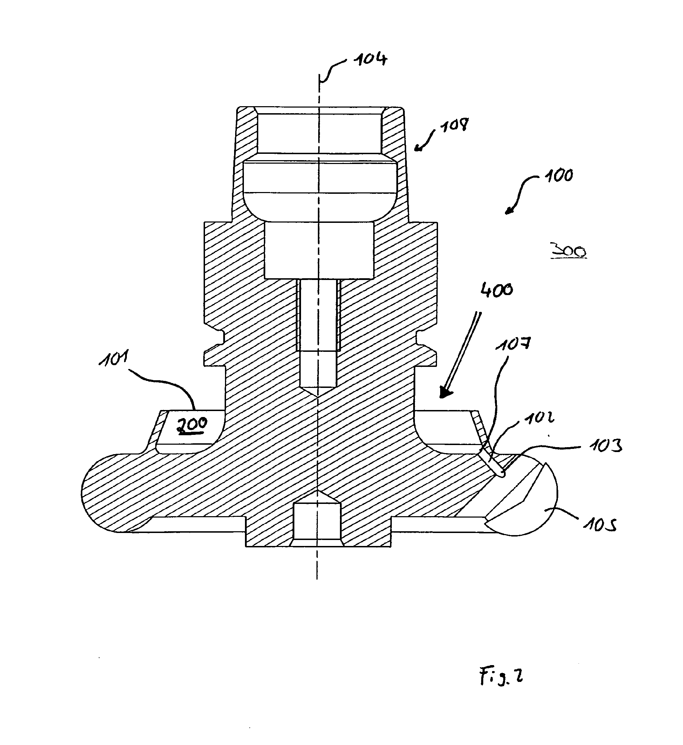

In Figur 2 ist ein Fräskopf 100 gemäß einer weiteren Ausführungsform der vorliegenden Erfindung dargestellt. Der Fräskopf 100 weist ein Kühlschmiermittel-reservoir 200 auf, das hier zwischen der Werkzeugaufnahme 108 und dem Abtragungsmittel 105 vorgesehen ist und sich kreisringähnlich um die Rotationsachse 104 erstreckt. In dieses Reservoir wird das Kühlschmiermittel aus der Umgebung 300 wie durch den Pfeil 400 dargestellt, eingefüllt. Das Einfüllen kann beispielsweise durch einen Kühlschmiermittelstrahl beispielsweise aus einem Schlauch erfolgen. An der Einfüllöffnung herrscht im Wesentlichen derselbe Druck wie in der Umgebung 300. Auch bei dieser Ausführungsform ist die Breite des Reservoirs abschnittsweise etwas größer als die Einfüllöffnung. Das Kühlschmiermittelreservoir 200 ist über die Kühlschmiermittelkanäle 102 mit den Kühlschmiermittelaustrittsöffnungen 103 verbunden. Die Kühlschmiermittelaustrittsöffnungen 103 sind gegenüber den Schneiden 105 angeordnet. Der Fräskopf 100 ist als Messerkopf ausgebildet, so dass die Schneiden 105 radial am Fräskopf 100 angeordnet sind.

Im Betrieb wird der Fräskopf 100 in Rotation um die Rotationsachse 104 versetzt. Das Kühlschmiermittel wird beispielsweise durch einen Strahl aus einem Schlauch in die Kühlschmiermitteleinfüllöffnung 101 eingebracht, wobei der Schlauch das Werkzeug vorzugsweise nicht berührt. Von dort strömt es in das Reservoir 200. Durch die Rotation und die dadurch entstehenden Fliehkräfte fließt das Kühlschmiermittel dann durch alle Kanäle 102 und verlässt diese jeweils durch die Austrittsöffnung und gelangt von dort unmittelbar in den Bereich der jeweiligen Schneide 105, um diese zu kühlen und/oder den Bereich der Abtragung zu schmieren. Vorzugsweise ist der Volumenstrom des Kühlschmiermittelstrahls größer als der gesamte Kühlschmiermittelvolumenstrom durch alle Kanäle. Der Fachmann erkennt, dass im Gegensatz zum Stand der Technik die Kühlschmiermittelzufuhr aus der Umgebung 300 des Werkzeuges und nicht, wie beim Stand der Technik, beispielsweise durch eine Maschinenspindel erfolgt. An der Einfüllöffnung 101 herrscht im wesentlichen Umgebungsdruck.

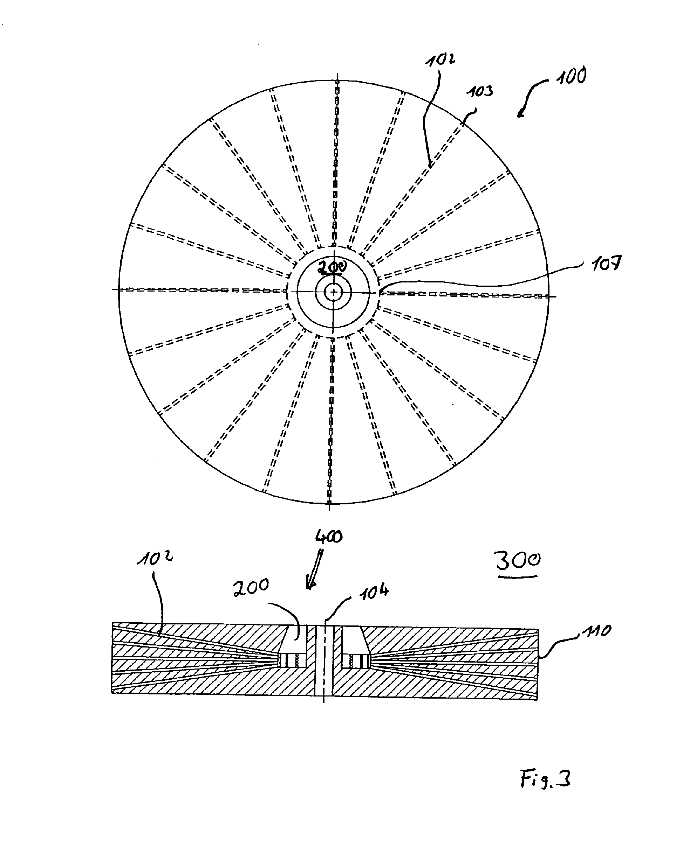

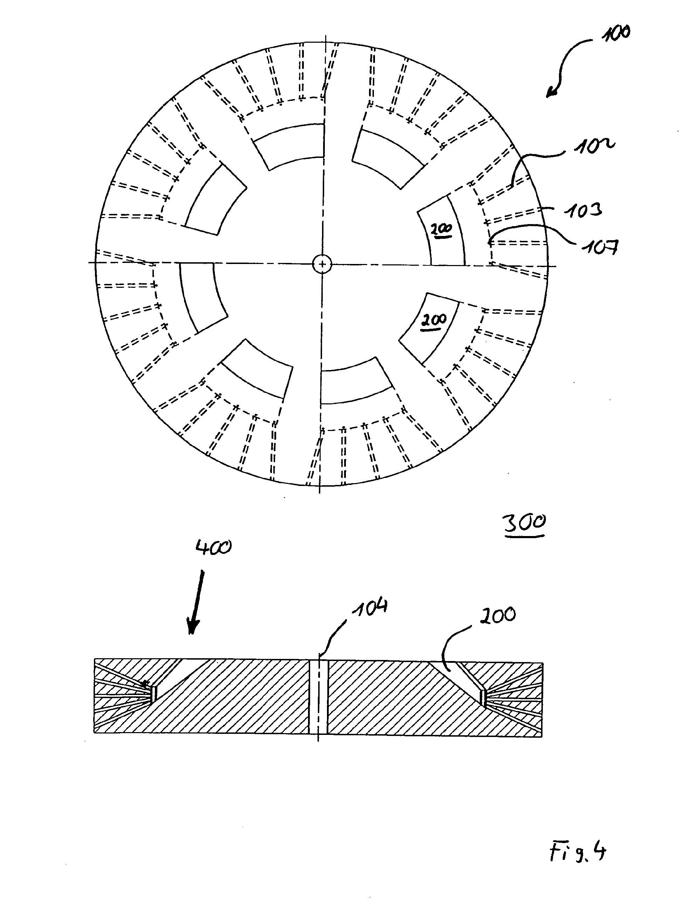

Die Figuren 3 und 4 ist das erfindungsgemäße Werkzeug eine Schleifscheibe 100, die ein Kühlschmiermittelreservoir 200 aufweist von dem Kanäle 102 abgehen, die zu der Bearbeitungsfläche der Schleifscheibe führen. Durch die Rotation der Schleifscheibe 100 wird das Kühlschmiermittel zu der Bearbeitungsfläche 110 der Schleifscheibe transportiert. Ansonsten wird auf die Ausführungen zu den Figuren 1 und 2 verwiesen.

### Bezugszeichenliste:

- 100: Werkzeug, Fräskopf, Schleifscheibe
- 101: Einfüllöffnung
- 102: Kühlschmiermittel-Kanal
- 103: Austrittsöffnung
- 104: Rotationsachse
- 105: Abtragungsmittel, Schneide, Schleifmittel
- 107: Eintrittsöffnung
- 108: Werkzeuganschluss
- 109: Stirnseite des Werkzeugs 100
- 110: Bearbeitungsfläche
- 200: Kühlschmiermittelreservoir
- 300: Umgebung
- 400: Kühlschmiermittelstrahl
- 500: Drehrichtung

## Patentansprüche

1. Rotierendes Werkzeug (100) für eine Werkzeugmaschine zur materialabtragenden Bearbeitung von Werkstoffen mit einem Abtragungsmittel (105) und einem Werkzeuganschluss (108), **dadurch gekennzeichnet, dass** das Werkzeug (100) mindestens einen Kühlschmiermittel-Kanal (102) mit jeweils einer Eintrittsöffnung (107) und jeweils einer Austrittsöffnung (103) aufweist und die Eintrittsöffnung (107) in ein Kühlmittelreservoir (200) mündet, das eine, vorzugsweise mit der Umgebung verbundene, Einfüllöffnung (101) aufweist.

2. Werkzeug (100) nach dem Oberbegriff des Anspruchs 1 oder nach einem der vorhergehenden Ansprüche, **dadurch gekennzeichnet, dass** das Werkzeug (100) mindestens ein Kühlschmiermittel-Reservoir (200) aufweist, in das von außerhalb des Werkzeugs (100) Kühlschmiermittel einbringbar ist.

3. Werkzeug (100) nach Anspruch 1 oder 2, **dadurch gekennzeichnet, dass** die Öffnung (107) und/oder das Reservoir (200) stirnseitig (109) vorgesehen ist.

4. Werkzeug (100) nach Anspruch 1 oder 2, **dadurch gekennzeichnet, dass** die Öffnung (107) und/oder das Reservoir (200) zwischen Abtragungsmittel (105) und Werkzeuganschluss (108) angeordnet ist.

5. Werkzeug (100) nach einem der voranstehenden Ansprüche, **dadurch gekennzeichnet, dass** das Kühlschmiermittel stirnseitig in das Werkzeug durch die Einfüllöffnung (101) einfüllbar ist.

6. Werkzeug (100) nach einem der voranstehenden Ansprüche, **dadurch gekennzeichnet, dass** Rotationsachse (104) des Werkzeugs (100) mittig durch die Einfüllöffnung (101) und das Kühlschmiermittel-Reservoir (200) verläuft.

7. Werkzeug (100) nach Anspruch 2, **dadurch gekennzeichnet, dass** die Einfüllöffnung (101) eine rotationssymmetrische Ausnehmung ist.

8. Werkzeug (100) nach einem der vorhergehenden Ansprüche, **dadurch gekennzeichnet, dass** die Einfüllöffnung (101) in das Reservoir (200) mündet, das vorzugsweise zumindest abschnittsweise einen größeren Querschnitt als die Einfüllöffnung (101) aufweist.

9. Werkzeug (100) nach einem der vorhergehenden Ansprüche, **dadurch gekennzeichnet, dass** das Reservoir (200) im Wesentlichen rotationssymmetrisch bezüglich der Rotationsachse (104) des Werkzeugs (100) angeordnet ist.

10. Werkzeug (100) nach einem der vorhergehenden Ansprüche, **dadurch gekennzeichnet, dass** das Werkzeug (100) eine Anzahl an Austrittsöffnungen (103) und eine Anzahl an Schneiden (105) aufweist und dass die Anzahl an Austrittsöffnungen (103) ≥ der Anzahl der Abtragungsmittel ist.

11. Werkzeug (100) nach einem der vorhergehenden Ansprüche, **dadurch gekennzeichnet, dass** die Austrittsöffnungen (103) den Schneiden (105) bezüglich der Rotationsachse (104) des Werkzeugs (100) in radialer Richtung gegenüberliegend angeordnet sind.

12. Werkzeug (100) nach einem der vorhergehenden Ansprüche, **dadurch gekennzeichnet, dass** die Kanäle (102) senkrecht zur Rotationsachse (104) des Werkzeugs (100) oder beliebig dazu geneigt, erstrecken.

13. Werkzeug (100) nach dem Oberbegriff des Anspruchs 1 oder nach einem der vorhergehenden Ansprüche, **dadurch gekennzeichnet, dass** das Kühlschmiermittel drucklos oder unter Druck dem Werkzeug (100) zuführbar ist.

14. Werkzeug (100) nach dem Oberbegriff des Anspruchs 1 oder nach einem der vorhergehenden Ansprüche, **dadurch gekennzeichnet, dass** ein KSM auch auf Maschinen ohne IKZ durch die Maschinenspindel zuführbar ist.

15. Werkzeug (100) nach dem Oberbegriff des Anspruchs 1 oder nach einem der vorhergehenden Ansprüche, **dadurch gekennzeichnet, dass** die KSM-Zufuhr keine Abdichtung im Bereich der KSM-Übergabe erfordert.

16. Werkzeug (100) nach dem Oberbegriff des Anspruchs 1 oder nach einem der vorhergehenden Ansprüche, **dadurch gekennzeichnet, dass** es als Schleifscheibe ausgeführt ist und in das vorzugsweise von beiden Seiten KSM in ein oder mehrere segmentartige/s KSM-Reservoir/e einbringbar ist.
